# EUROPÄISCHE PATENTSCHRIFT

(11) **EP 0 819 331 B1**
(45) Veröffentlichungstag und Bekanntmachung des Hinweises auf die Patenterteilung: **03.02.1999**
(21) Anmeldenummer: 96909033.1
(22) Anmeldetag: 03.04.1996
(51) Int. Cl.: H02K 11/00, B60R 16/00, E05F 15/16, B60N 2/02

(54) **ELEKTROMECHANISCHE STEUEREINHEIT FÜR VERSTELLEINRICHTUNGEN IN KRAFTFAHRZEUGEN**
ELECTROMECHANICAL CONTROL UNIT FOR ADJUSTING DEVICES IN MOTOR VEHICLES
UNITE DE COMMANDE ELECTROMAGNETIQUE POUR LES DISPOSITIFS DE REGLAGE DE VEHICULES AUTOMOBILES

(30) Priorität: 07.04.1995 DE 19513085
(43) Veröffentlichungstag der Anmeldung: 21.01.1998
(73) Patentinhaber: Brose Fahrzeugteile GmbH & Co. KG, 96450 Coburg (DE)
(72) Erfinder: SEEBERGER, Jürgen, D-96148 Baunach (DE); PLEISS, Eberhard, D-96253 Untersiemau (DE); STENZEL, Manfred, D-96047 Bamberg (DE); SESSELMANN, Helmut, D-96523 Steinach (DE)
(74) Vertreter: Müller, Wolfram Hubertus, Dipl.-Phys.
(86) Internationale Anmeldenummer: DE9600631
(87) Internationale Veröffentlichungsnummer: WO9631935

(56) Entgegenhaltungen:
- WO-A-90/10558
- WO-A-91/01060
- DE-A- 3 609 609
- DE-A- 4 430 700
- DE-C- 4 323 946
- US-A- 2 921 783
- PATENT ABSTRACTS OF JAPAN vol. 012, no. 478 (M-775), 14.Dezember 1988 & JP,A,63 199121 (OI SEISAKUSHO CO LTD), 17.August 1988,

## Beschreibung

Die Erfindung betrifft eine elektromechanische Steuereinheit für Verstellvorrichtungen in Kraftfahrzeugen gemäß dem Oberbegriff des Patentanspruchs 1 (WO-A-90/10558) und läßt sich besonders vorteilhaft in Verbindung mit einem Fensterheberantrieb in einer Fahrzeugtür einsetzen.

Aus WO 91/01060 ist eine Antriebseinheit für einen elektromotorisch betriebenen Fensterheber bekannt, die aus einem Motor mit Getriebe sowie einer Steuer- und Regelelektronik besteht. Dabei ist das Getriebegehäuse so ausgebildet, daß die Steuer- und Regelelektronik dann eingesetzt werden kann. Über einen an der Elektronik angebrachten Stecker steht die Antriebseinheit mit einem entfernt angebrachten Schalter zur Erzeugung von Steuersignalen und einer Spannungsquelle in Verbindung.

Die beschriebene Antriebseinheit stellt zwar eine relativ kompakte Baugruppe dar, jedoch kann die elektrisch leitende Verbindung zwischen dieser Einheit und dem Schalterblock erst im Zuge der Komplettierung der Kraftfahrzeugtür hergestellt werden. Dies verursacht gegenüber der separat ausgeführten Modulbauweise einen erhöhten Montageaufwand. Eine gemeinsame Vorprüfung der Antriebseinheit, einschließlich der Schalter, ist nicht möglich.

In DE-PS 36 09 609 C2 wird eine aus einem Elektronikmodul, aus Steckelementen und Bedienschaltern bestehende Montageeinheit beschrieben, die in eine Kraftfahrzeugtür eingebaut werden soll und über einen Kabelstrang mit Funktionselementen, zum Beispiel einer Spiegelverstellung, einer Zentralverriegelung und/oder einem Fensterheberantrieb in Verbindung steht. Das Gehäuse dieser Montageeinheit lagert entweder in einem Teil der Türinnenverkleidung (zum Beispiel Armlehne) oder am Türinnenblech.

Auch hier besteht der Nachteil in der Notwendigkeit der nachträglichen Verkabelung des Elektronik-Schalter-Moduls mit der elektrischen Funktionseinheit. Eine Prüfung aller elektrischen und elektronischen Teile in ihrem Zusammenwirken kann erst nach der Komplettierung der Fahrzeugtür vorgenommen werden.

Der Erfindung liegt die Aufgabe zugrunde, den Integrationsgrad von elektrischen und elektronischen Baugruppen für Verstelleinrichtungen und sonstige Funktionsgruppen in Kraftfahrzeugen zu erhöhen sowie den Herstellungs- und Prüfaufwand zu senken.

Erfindungsgemäß wird die Aufgabe durch die Merkmale des Patentanspruchs 1 gelöst. Die Unteransprüche beschreiben Vorzugsvarianten der Erfindung.

Gemäß der Erfindung bilden der elektromechanische Antrieb, die Elektronikeinheit und wenigstens ein Schalter eine vorprüfbare modulare Einheit. Zur praktischen Realisierung dieser Einheit ist es notwendig, die räumlichen Bedingungen der mit dem Antrieb verbundenen Verstelleinrichtung einerseits und die Lage der zur Generierung von Steuersignalen notwendigen Schalter andererseits aufeinander abzustimmen. Es ist darauf zu achten, daß durch die vom elektromechanischen Antrieb ausgehenden Kräfte und damit verbundener elastischer Verformungen von tragenden Teilen keine oder nur unbedeutend geringe Bewegungen auf die Schalter übertragen werden. Dies kann beispielsweise durch eine elastische, schwimmende Verbindung zwischen dem Schalter und der Elekronikeinheit erreicht werden. Dabei sollte der Schalter mit einer Abdeckung, beispielsweise der Türinnenverkleidung, formschlüssig im Eingriff stehen. Andererseits kann der Schalter auch über eine flexible elektrische Leitung mit der Elektronikeinheit verbunden sein, wobei wiederum der Schalter von einer Abdeckung oder dergleichen getragen wird.

Gemäß einer Vorzugsvariante der Erfindung trägt die modulare Einheit wenigstens einen weiteren Schalter, der mit einem weiteren elektrischen Funktionselement in Verbindung steht. Dies kann beispielsweise eine elektrische Sitzverstellung oder Spiegelverstellung bzw. -heizung sein. Hierdurch läßt sich der Aufwand zur separaten Montage des zweiten Schalters einsparen. Die Stromversorgung der modularen Einheit sowie die elektrische Verbindung des zusätzlichen Schalters mit dem weiteren elektrischen Funktionselement läßt sich über eine gemeinsame serielle Schnittstelle realisieren. Zur Erweiterung der modularen Einheit mit einem zusätzlichen Schalter ist zwischen diesem und der Elektronik eine elektrische Steckverbindung vorgesehen, die gleichzeitig mit der mechanischen Verbindung der beiden Teile hergestellt wird.

Eine weitere Variante der Erfindung sieht vor, den Schalter zur Steuerung von mindestens einem weiteren elektrischen Funktionselement in einem separaten Gehäuse anzuordnen und mit einem eigenen elektrischen Ausgang auszustatten. Somit besteht die Verbindung des Schalters mit der modularen Einheit lediglich noch mechanisch. Soweit das weitere elektrische Funktionselement, zum Beispiel eine elektrische Sitzverstellung, eine separate Steuerungselektronik aufweisen soll, so kann diese entweder im Gehäuse des zugeordneten Schalters oder in der Nähe der Funktionseinheit (des Sitzverstellsystems) angeordnet sein. Für den Fall, daß beide elektrischen Funktionselemente, zum Beispiel der Fensterheber und die Sitzverstellung, mit einer elektronischen Steuereinheit ausgerüstet werden sollen, wäre nicht nur die räumliche Unterbringung dieser Elektroniken einem gemeinsamen Gehäuse, sondern auch deren funktionelle Vereinigung vorteilhaft. Eventuell notwendige Relais zum Schalten von Leistungsströmen können an einem von der modularen Einheit entfernten Ort untergebracht werden.

Bei Verwendung der erfindungsgemäßen modularen Einheit in Verbindung mit einem elektrischen Fensterheber sollte diese vorzugsweise auf einer relativ formstabilen Trägerplatte auf der Seite des Trockenraumes vormontiert werden. Dadurch ist es möglich, auf kostenintensive Maßnahmen zum Feuchtigkeitsschutz der sensiblen elektrischen Bauelemente zu verzichten.

Nachfolgend wird die Erfindung anhand von Ausführungsbeispielen sowie den dargestellten Figuren näher erläutert. Es zeigen:
- Figur 1: zeigt verschiedene Ansichten einer für einen Fensterheber vorgesehenen elektromechanischen Steuereinheit.
- Figur 1a: Seitenansicht;
- Figur 1b: steckerseitige Ansicht;
- Figur 1c: Draufsicht;
- Figur 2a bis 2c: modulare Einheit gemäß den Figuren 1a bis 1c in verschiedenen Ansichten, jedoch erweitert durch einen Schalter für eine elektrisch betriebene Sitzverstellung;
- Figur 3a bis 3c: modulare Einheit gemäß den Figuren 1a bis 1c in verschiedenen Ansichten, erweitert durch einen Schalter mit separatem elektrischen Eingang für eine elektrisch betriebene Sitzverstellung;
- Figur 4: schematische Darstellung einer elektromechanischen Steuereinheit für einen elektrisch betriebenen Fensterheber und zusätzlichen Schalterblöcken für eine Elektronische Sitzmemory sowie eine elektrische Spiegelverstellung;
- Figur 5a: elektromechanische Steuereinheit mit Flachbandkabelverbindung zwischen Elektronik und Schalterblock in Transportposition;
- Figur 5b: Schnittdarstellung durch die elektromechanische Steuereinheit im Einbauzustand in einer Kraftfahrzeugtür;
- Figur 5c: Seitenansicht der elektromechanischen Steuereinheit im Einbauzustand;
- Figur 5d: Draufsicht auf den Schalterbereich der Kraftfahrzeugtür.

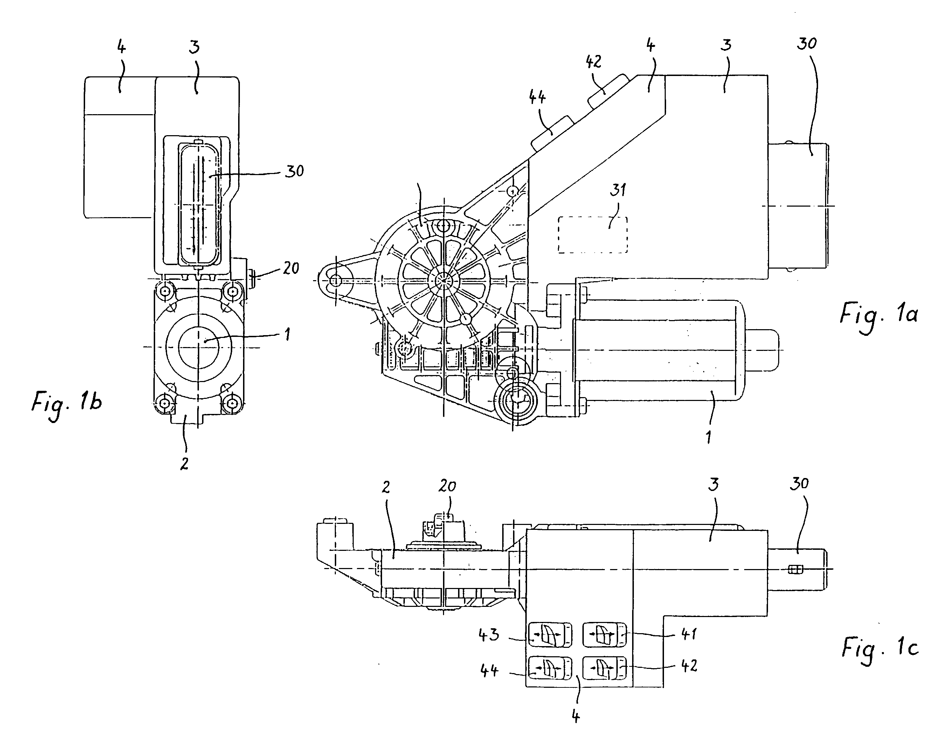

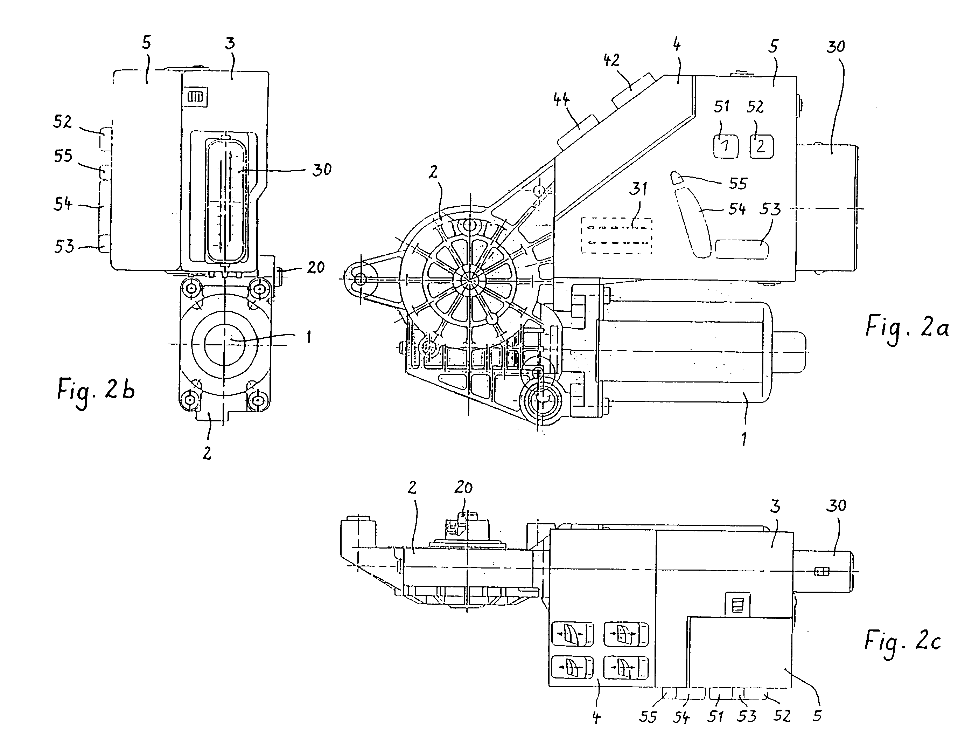

Die in den Figuren 1a bis 1c dargestellten Ansichten zeigen anhand einer elektromechanischen Steuereinheit für einen elektrisch angetriebenen Fensterheber eine Minimalvariante der Erfindung. Sie umfaßt jeweils nur eine Elektronik 3 mit nur einem Schalterblock 4 für einen elektromechanischen Antrieb 1,2. Dabei bildet der seitlich angeordnete Schalterblock 4 mit dem Gehäuse der Elektronik 3 eine Einheit. Die einzelnen Tastschalter 41,42, 43, 44 zur Betätigung der vier Seitenscheiben eines Kraftfahrzeugs sind Bestandteil einer fahrerseitigen Antriebs- und Steuereinheit. Vorteilerhafter ist jedoch die Herstellung der erfindungsgemäßen modularen Einheit unter Verwendung eines separaten, mit der Elektronik 3 verbindbaren Schalterblocks 4, um die Variantenvielfalt zu reduzieren So kann allein durch den Austausch des dargestellten Schalterblocks 4 durch einen für den Fond bestimmten Schalterblock in einfacher Weise eine neue Variante generiert werden. Über eine Steckverbindung 30 wird die Elektronik 3 und auch der Motor 1 mit elektrischer Energie versorgt. Ebenso können Signale, zum Beispiel die Schaltzustände des Zündschlosses oder der Verriegelungszustand der Türen, über diese Steckverbindung 30 übertragen werden. Die Erfindungsvariante gemäß den Figuren 2a bis 2c weist zusätzlich einen Schalterblock 5 für eine elektrische Sitzverstellung auf, sie stimmt ansonsten aber mit der voranbeschriebenen Einheit überein. In der Seitenwand der Elektronik 3 befindet sich unterhalb des Schaltblocks 4 für den Fensterheber eine Steckverbindung 31, über die der Schalterblock 5 für die Sitzverstellung mit der Elektronik 3 verbunden werden kann. Im vorliegenden Fall handelt es sich um einen Schalter 5 für eine Sitzverstellung mit Memoryfunktion, wobei durch Betätigung der Tasten 51, 52 die zugehörigen programmierten Sitzpositionen angefahren werden können. Zur gezielten Verstellung von Sitzkissen, Rückenlehne und Kopfstütze steht eine den Sitz symbolisch nachbildende Tasten kombination 53, 54, 55 zur Verfügung.

Mit der Steckverbindung 30 verfügen die beiden Schalterblöcke 4,5 über eine gemeinsame serielle Schnittstelle. Zwei verschiedene Ausführungsformen dieser Erfindungsvariante sind verfügbar: Zum einen kann die Elektronik 3 die Steuerung des Fensterhebers als auch der Sitzverstellung übernehmen, zum anderen könnte der Schalterblock eine separate Sitzelektronik beinhalten, die über die Steckverbindung 31 mit der seriellen Schnittstelle 30 in Verbindung steht. So wird also die Steckverbindung 31 entsprechend des gewählten Ausstattungsgrades des Fahrzeugs optional belegt.

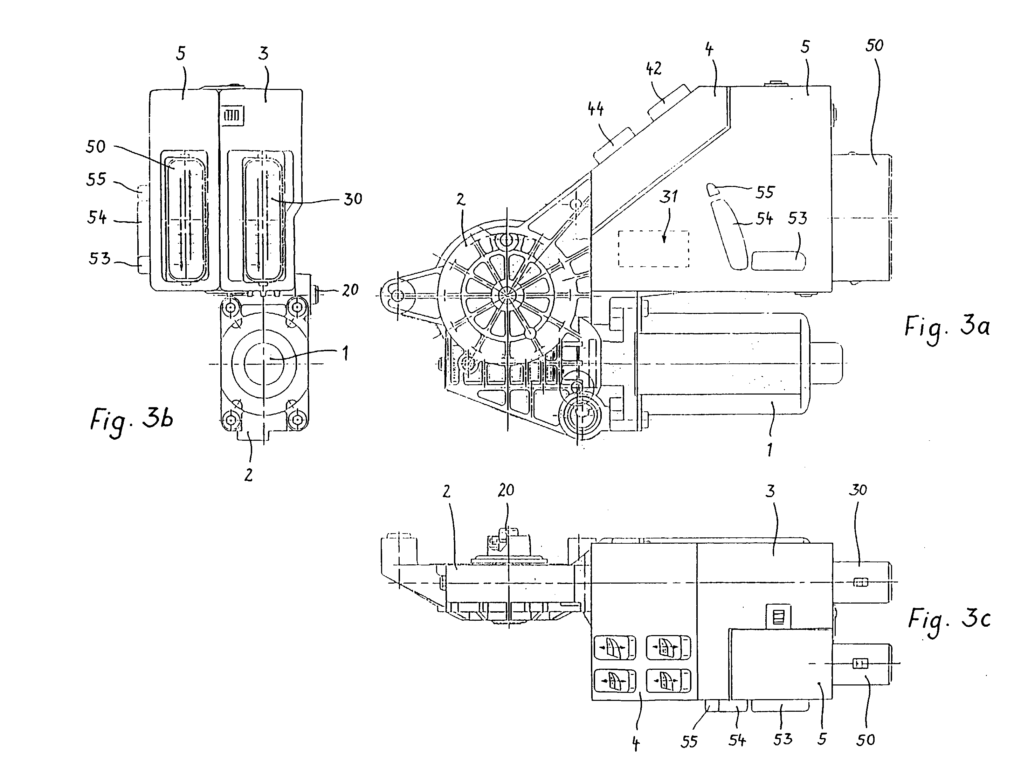

Eine weitere optional verfügbare Variante zeigen die Figuren 3a bis 3c. Hier ist die modulare elektromechanische Steuereinheit mit einem Schalterblock 5 komplettiert, der einer Sitzverstellung ohne Memoryelektronik zugeordnet ist. Außerdem besitzt der Schalterblock 5, über den der Leistungsstrom geschaltet wird, eine separate Steckverbindung 50, woran das Kabel der Sitzverstellung angeschlossen ist. Grundsätzlich besteht auch die Möglichkeit, die optionale Steckverbindung 31 zur Weiterleitung von Signalen (zum Beispiel des Zündschlosses) zu nutzen, die der Fensterheberelektronik 3 über die Steckverbindung 30 zugeführt werden.

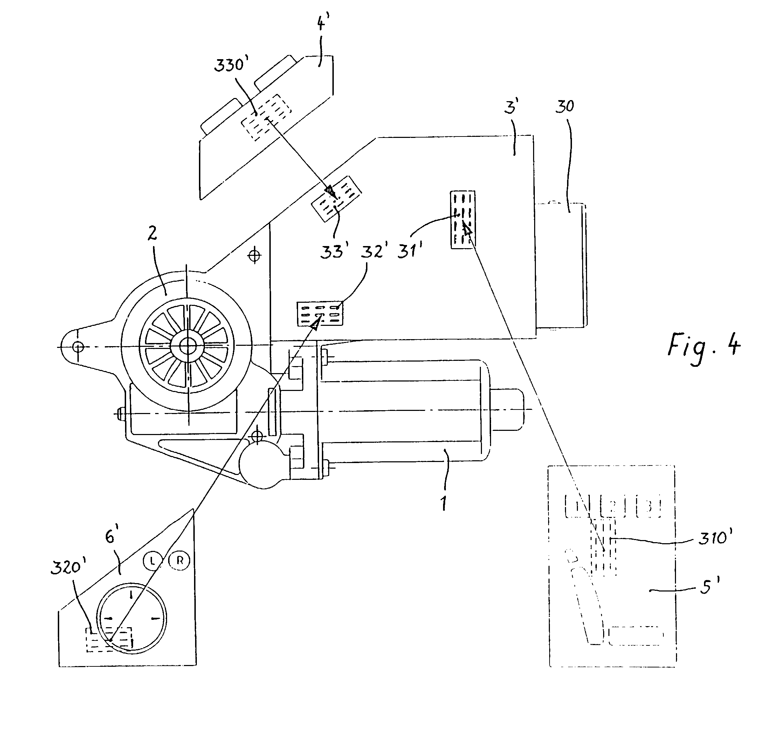

Einen besonders hohen Integrationsgrad weist die in Figur 4 modulare Einheit auf. Sie besitzt je einen Steckerblock 4', 5',6' für den Fensterheberantrieb 4', für die Sitzverstellung 5' und für die Spiegelverstellung 6', wobei dieser über Steckverbindungen 31', 310', 32', 320', 33', 330' mit einer gemeinsamen Elektronik 3' kontaktiert sind. Alle für die Stromversorgung und den sonstigen Signalaustausch notwendigen Kontakte werden über die Steckverbindung 30 realisiert. Diese Ausführungsform stellt eine große Anzahl optional kostengünstig erzeugbarer Varianten zur Verfügung.

An dieser Stelle sei darauf hingewiesen, daß die elastische Verbindung zwischen der Elektronik 3, 3' und den vorgesehenen Schalterblöcken 4, 4', 5, 5',6' Fertigungstoleranzen zwischen der Befestigungsstelle der modularen Einheit und der Türinnenverkleidung ausgleichen kann. Auch bei der Übertragung der mechanischen Antriebsenergie über die Antriebswelle 20 auf das Verstellsystem des Fensterhebers können elastische Verformungen an tragenden Teilen der Tür auftreten, die einen entsprechenden Bewegungsausgleich erforderlich machen.

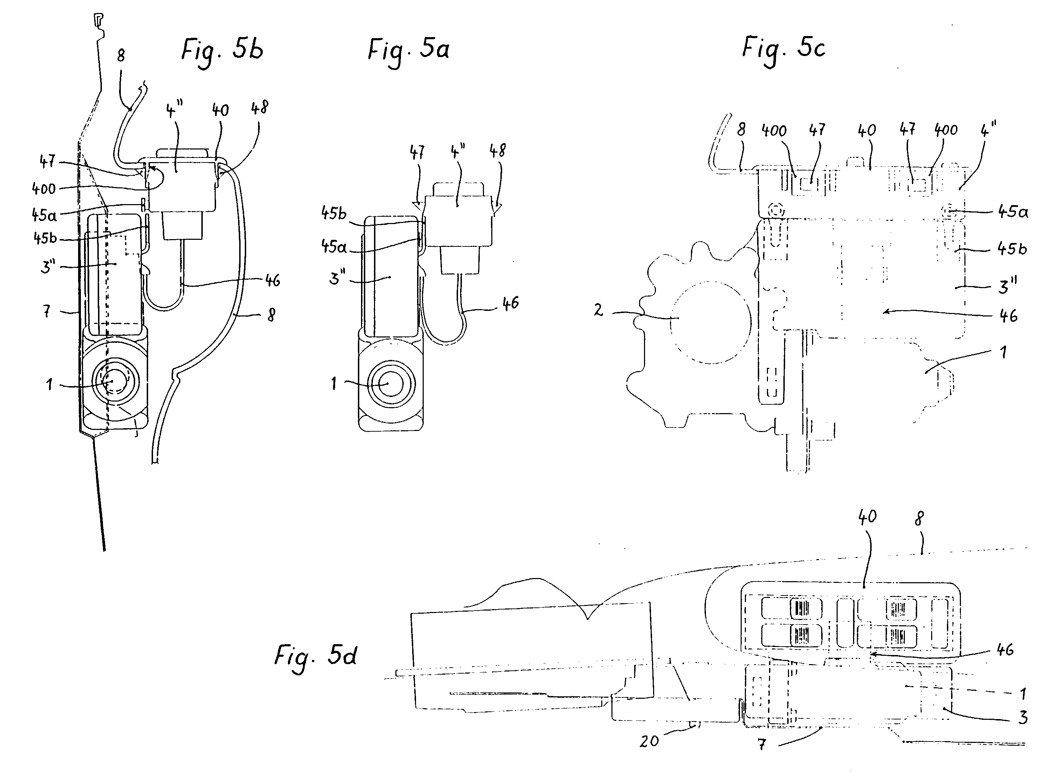

Die in den Figuren 5a bis 5d dargestellte Erfindungsvariante verwendet ein flexibles Flachbandkabel 46 zwischen der Elektronik 3" und dem Schalterblock 4" und bietet somit besonders gute Voraussetzungen zum Ausgleich von Relativbewegungen. Während die starr zusammenhängenden Teile (Motor 1, Getriebe 2 und Elektronik 3") am Türinnenblech 7 oder einer Trägerplatte montiert sind, wird der Schalterblock 4" von der Türinnenverkleidung 8 getragen. Eine in die Türinnenverkleidung 8 eingesetzte Blende 40 weist eine nach unten in den Türinnenraum gerichtete Lasche 400 mit Ausnehmungen auf, in die Vorsprünge 47, 48 des Schaltergehäuses 4" einclipsbar sind, was eine einfache Fixierung des Schalterblocks 4" an der Türinnenverkleidung 8 ermöglicht (siehe Figuren 5b und 5c). Relativbewegungen zwischen den am Türinnenblech 7 befestigten Teilen 1,2,3" und dem Schalterblock 4" werden problemlos vom flexiblen Flachbandkabel 46 ausgeglichen.

Figur 5a zeigt die erfindungsgemäße modulare Einheit in ihrer Transportposition vor der Montage in der Tür. Das Gehäuse der Elektronik 3" trägt eine gabelförmige nach oben offene Transporthalterung 45b, in die eine paßfähige, bolzenartige Transporthalterung 45a des Schalterblock 4" eingreifen kann. Die Transportposition ist so gewählt, daß bei einer während der Montage ausgeführten Aufwärtsbewegung des Schalterblocks 4" unmittelbar nach dem Lösen der Transporthalterung 45a, 45b seine Befestigung an der Blende 40 und somit an der Türinnenverkleidung 8 erfolgt.

Die Draufsicht auf den Schalterbereich einer für den Fahrer konzipierten Kraftfahrzeugtür zeigt Figur 5d. Durch die Blende 4 sind Taster zur Betätigung von vier Fensterhebern zugänglich.

### Bezugszeichenliste

- 1 -: Motor

- 2 -: Getriebe
- 20 -: Antriebsachse

- 3 -: Elektronik
- 3' -: Elektronik
- 3" -: Elektronik
- 30 -: Steckverbindung
- 31' -: optionale Steckverbindung für Sitzverstellschalter
- 32' -: optionale Steckverbindung für Spiegelverstellschalter
- 33' -: optionale Steckverbindung für Fensterheberschalter
- 310' -: Steckverbindung des Sitzverstellschalters
- 320' -: Steckverbindung des Spiegelverstellschalters
- 330' -: Steckverbindung des Fensterheberschalters

- 4 -: Schalterblock der Fensterheberverstellung
- 4' -: Schalterblock der Sitzverstellung
- 4" -: Schalterblock für Fensterheber
- 40 -: Blende für Schalterblock
- 41 -: Tastschalter für fahrerseitiges Fenster
- 42 -: Tastschalter für beifahrerseitiges Fenster
- 43 -: Tastschalter für fahrerseitiges Fondfenster
- 44 -: Tastschalter für beifahrerseitges Fondfenster
- 45a -: Transporthalterung
- 45b -: Transporthalterung
- 47 -: Vorsprung des Schaltergehäuses
- 48 -: Vorsprung des Schaltergehäuses
- 400 -: Lasche der Blende mit Ausnehmung
- 5 -: Schalterblock der Sitzverstellung
- 5' -: Schalterblock der Spiegelverstellung
- 51 -: Steckverbindung
- 52 -: Memorytaster für erste gespeicherte Sitzposition
- 53 -: Memorytaster für zweite gespeicherte Sitzposition
- 53 -: Tastschatler für Sitzkissenverstellung
- 54 -: Tastschalter für Lehnenverstellung
- 55: Tastschalter für Kopfstützenverstellung

- 6' -: Schalterblock des Fensterhebers
- 7 -: Trägerplatte/Türinnenblech
- 8 -: Türinnenverkleidung

## Patentansprüche

1. Elektromechanische Steuereinheit für Verstelleinrichtungen in Kraftfahrzeugen, insbesondere für Fensterheber, bestehend aus einem elektromechanischen Antrieb mit Elektromotor (1) und Getriebe (2), einer mit dem Elektromotor in Wirkverbindung stehenden Elektronikeinheit (3), mindestens einem mit der Elektronikeinheit in Wirkverbindung stehenden Schalter (4) zur Auslösung von Steuerbefehlen sowie mindestens einem weiteren Schalter (5, 6) zur Steuerung mindestens eines weiteren Funktionselements, z.B. einer elektrischen Sitz- oder Spiegelverstellung,
**dadurch gekennzeichnet**,
daß die Schalter (4, 4', 4", 5, 5', 6') an einem den elektromechanischen Antrieb (1, 2) und die Elektronikeinheit (3, 3', 3") umfassenden Gehäuse mechanisch festlegbar und elektrisch koppelbar sind, bevor diese modulare Einheit in ein übergeordnetes Funktionssystem eingebaut ist, wobei der Schalter (5, 5') zur Steuerung des weiteren Funktionselements über einen elektrischen Steckkontakt (31, 31', 310') mit der Elektronikeinheit (3, 3', 3") in Verbindung steht und mit dieser über eine gemeinsame serielle Schnittstelle verfügt.

2. Elektromechanische Steuereinheit nach Anspruch 1, **dadurch gekennzeichnet**, daß der Schalter (4') oder Teile des Schalters mit einer Abdeckung (40) formschlüssig in Eingriff stehen, und daß der Schalter (4') mit der Elektronikeinheit (3') in elastischer, schwimmender Verbindung steht.

3. Elektromechanische Steuereinheit nach Anspruch 1, **dadurch gekennzeichnet**, daß der Schalter (4") oder Teile des Schalters mit einer Abdeckung (40) formschlüssig in Eingriff stehen, und daß der Schalter (4") mit der Elektronikeinheit (3") über eine flexible elektrische Leitung (46) in Verbindung steht.

4. Elektromechanische Steuereinheit nach einem der vorangehenden Ansprüche, **dadurch gekennzeichnet**, daß der Schalter (5, 5', 6') zur Steuerung von mindestens einem weiteren elektrischen Funktionselement in einem separaten Gehäuse angeordnet und wahlweise mit der elektromechanischen Steuereinheit kombinierbar ist.

5. Elektromechanische Steuereinheit nach einem der vorangehenden Ansprüche, **dadurch gekennzeichnet**, daß der Schalter eine separate elektrische Verbindung (50) zu einem Sitzverstellsystem aufweist.

6. Elektromechanische Steuereinheit nach Anspruch 1, **dadurch gekennzeichnet**, daß eine separate Sitzelektronik vorgesehen ist, die entweder mit dem zugeordneten Schalter (5, 5') oder dem elektrischen Antrieb eine Einheit bildet.

7. Elektromechanische Steuereinheit nach Anspruch 1, **dadurch gekennzeichnet**, daß eine Fensterheberelektronik und eine Sitzelektronik eine Einheit bilden und das gegebenenfalls notwendige Relais der Sitzverstellung in der Nähe des zugehörigen Antriebs oder in einem separaten Gehäuse angeordnet ist.

8. Elektromechanische Steuereinheit nach Anspruch 1, **dadurch gekennzeichnet**, daß das Elektronikgehäuse im Bereich des Steckkontaktes (31, 31') ein entnehmbares Verschlußteil aufweist, so daß bei Bedarf eine Steckverbindung zwischen dem Sitzschalter und der Elektronik (3, 3') hergestellt werden kann.

9. Elektromechanische Steuereinheit nach Anspruch 8, **dadurch gekennzeichnet**, daß das Verschlußteil einem durch Sollbruchstellen gebildeten Bereich entspricht und aus dem Gehäuse ausbrechbar ist.

10. Elektromechanische Steuereinheit nach einem der vorangehenden Ansprüche, **dadurch gekennzeichnet**, daß der Schalter zum Steuern eines Fensterhebers in einer im wesentlichen horizontalen oder in Fahrtrichtung ansteigend verlaufenden Fläche und der Schalter zur Ansteuerung einer Sitzverstellung in einer im wesentlichen vertikal ausgerichteten, in den Fahrgastinnenraum weisenden Fläche der Türinnenverkleidung angeordnet ist.

11. Elektromechanische Steuereinheit nach Anspruch 1, **dadurch gekennzeichnet**, daß diese auf einer Trägerplatte eines Türmoduls auf der Seite des Trockenraums vormontiert ist.

## Claims

1. Electromechanical control unit for adjustment devices in motor vehicles, more particularly for window lifters, consisting of an electromechanical drive with electric motor (1) and gearing (2), an electronics unit (3) in active connection with the electric motor, at least one switch (4) in active connection with the electronics unit for triggering control commands as well as at least one further switch (5, 6) for controlling at least one further function element, e.g. an electric seat or mirror adjustment,
**characterised in that**
the switches (4,4',4",5,5',6') can be mechanically fixed on, and electrically coupled to a housing comprising the electromechanical drive (1,2) and the electronics unit (3,3',3") before this modular unit is installed in a higher function system wherein the switch (5,5') for controlling the further function element is connected by an electrical plug contact (31,31',310') to the electronics unit (3,3',3") and has a common serial interface with same.

2. Electromechanical control unit according to claim 1 **characterised in that** the switch (4') or parts of the switch is/are in positive engagement with a cover (40) and that the switch is in floating elastic connection with the electronics unit (3').

3. Electromechanical control unit according to claim 1 **characterised in that** the switch (4") or parts of the switch is/are in positive connection with a cover (40) and that the switch (4") is connected to the electronics unit (3") by a flexible electrical lead.

4. Electromechanical control unit according to one of the preceding claims **characterised in** that the switch (5,5',6') for controlling at least one further electrical function element is mounted in a separate housing and can be selectively combined with the electromechanical control unit.

5. Electromechanical control unit according to one of the preceding claims, **characterised in that** the switched has a separate electrical connection (50) with a seat adjustment system.

6. Electromechanical control unit according to claim 1 **characterised in that** a separate seat electronics is provided which forms one unit with either the associated switch (5,5') or the electrical drive.

7. Electromechanical control unit according to claim 1 **characterised in that** a window lifter electronics and a seat electronics form one unit and the relay of the seat adjustment which is required where applicable is mounted near the associated drive or in a separate housing.

8. Electromechanical control unit according to claim 1 **characterised in that** the electronic housing has in the area of the plug contact (31,31') a removable closure part so that when required a plug connection can be produced between the seat switch and the electronics (3,3').

9. Electromechanical control unit according to claim 8 **characterised in that** the closure part corresponds to an area formed by ideal break points and can be broken off from the housing.

10. Electromechanical control unit according to one of the preceding claims **characterised in that** the switch for controlling a window lifter is mounted in a surface which is substantially horizontal or rises in the travel direction and the switch for controlling a seat adjustment is mounted in a surface of the inner door trim which is vertically aligned and points into the passenger interior.

11. Electromechanical control unit according to claim 1 **characterised in that** this is prefitted on a support plate of a door module on the side of the dry space.

## Revendications

1. Unité de commande électromécanique pour des dispositifs de réglage de véhicules automobiles, en particulier pour des lève-glaces ou remonte-glaces, constituée par un entraînement électro-mécanique avec un moteur électrique (1) et un engrenage (2), une unité électronique (3) en liaison opérante avec le moteur électrique, au moins un commutateur (4) en liaison opérante avec l'unité électronique, pour le déclenchement des ordres de commande ainsi qu'au moins un autre commutateur (5, 6) pour la commande d'au moins un autre élément de fonction, par exemple un réglage électrique de siège ou de rétroviseur,
**caractérisée en ce que**
les commutateurs (4, 4', 4", 5, 5', 6') peuvent être fixés mécaniquement et couplés électriquement sur un boîtier renfermant l'entraînement électromagnétique (1, 2) et l'unité électronique (3, 3', 3"), avant l'incorporation de cette unité modulaire dans un système fonctionnel supérieur, le commutateur (5, 5') pour la commande de l'autre élément fonctionnel étant en liaison par l'intermédiaire d'un contact enfichable électrique (31, 31', 310') avec l'unité électronique (3, 3', 3") et disposant d'une interface en série commune avec celle-ci.

2. Unité de commande électromécanique selon la revendication 1, **caractérisée en ce que** le commutateur (4') ou des parties du commutateur sont en prise par engagement positif avec une enveloppe (40) et en ce que le commutateur (4') est en liaison élastique, flottante avec l'unité électronique (3').

3. Unité de commande électromécanique selon la revendication 1, **caractérisée en ce que** le commutateur (4") ou les parties de commutateur sont en prise par engagement positif avec une enveloppe (40), et en ce que le commutateur (4") est en liaison avec l'unité électronique (3") au moyen d'un câble électrique souple (46).

4. Unité de commande électromécanique selon l'une des revendications précédentes, **caractérisée en ce que** le commutateur (5, 5', 6') pour la commande d'au moins un autre élément de fonction électrique est agencé dans un boîtier séparé et pourra être sélectivement combiné avec l'unité de commande électromécanique.

5. Unité de commande électromécanique selon l'une des revendications précédentes, **caractérisée en ce que** le commutateur comporte une liaison électrique séparée (50) avec un système de réglage de siège.

6. Unité de commande électromécanique selon la revendication 1, **caractérisée en ce qu'**il est prévu un système électronique de siège séparé qui forme une unité avec le commutateur affecté (5, 5') ou avec l'entraînement électrique.

7. Unité de commande électromécanique selon la revendication 1, **caractérisée en ce qu'**un système électronique pour lève-glaces ou remonte-glaces et un système électronique pour siège forment une unité et le relais éventuellement nécessaire pour le réglage de siège est disposé à proximité de l'entraînement correspondant ou dans un logement séparé.

8. Unité de commande électromécanique selon la revendication 1, **caractérisée en ce que** le logement électronique présente au niveau du contact enfichable (31, 31') une partie d'obturation amovible de sorte qu'en cas de besoin, on pourra établir une liaison enfichable entre le commutateur de siège et le système électronique (3, 3').

9. Unité de commande électromécanique selon la revendication 8, **caractérisée en ce que** la partie d'obturation correspond à une zone formée par des points de rupture nominale pouvant être arrachée du boîtier.

10. Unité de commande électromécanique selon l'une des revendications précédentes, **caractérisée en ce que** le commutateur destiné à la commande d'un lève-glaces ou remonte-glaces est agencé dans une surface s'étendant essentiellement horizontalement ou de façon montante dans le sens de la marche et le commutateur destiné à la commande du réglage de siège est disposé sur une surface dirigée essentiellement verticalement dans l'habillage interne des portes de l'habitacle pour passagers.

11. Unité de commande électromécanique selon la revendication 1, **caractérisée en ce que** celle-ci est prémontée sur une plaque de support d'un module de porte sur le côté de la zone sèche.
